# EUROPÄISCHE PATENTSCHRIFT

(11) **EP 3 495 290 B1**
(45) Veröffentlichungstag und Bekanntmachung des Hinweises auf die Patenterteilung: **26.10.2022**
(21) Anmeldenummer: 18210136.0
(22) Anmeldetag: 04.12.2018
(51) Int. Cl.: B65G 1/04, B25J 9/04, B65G 1/137

(54) **MOBILER KOMMISSIONIERROBOTER MIT UM EINE HUB-NEIGE-ACHSE ERGÄNZTER, FLACHER KINEMATIK**
MOBILE ORDER PICKING ROBOT WITH FLAT KINEMATICS AROUND A LIFTING AND TILTING AXIS
ROBOT DE PRÉPARATION DE COMMANDES MOBILE DOTÉ D'UNE CINÉMATIQUE PLANE COMPORTANT UN ESSIEU ÉLÉVATEUR INCLINABLE

(30) Priorität: 11.12.2017 DE 102017129468
(43) Veröffentlichungstag der Anmeldung: 12.06.2019
(73) Patentinhaber: Linde Material Handling GmbH, 63743 Aschaffenburg (DE)
(72) Erfinder: EHRENLEITNER, Franz, 72213 Altensteig-Walddorf (DE); KRUMBHOLZ, Peter, 63869 Jakobsthal (DE); GROH, Jonas, 63743 Aschaffenburg (DE)
(74) Vertreter: Patentship Patentanwaltgesellschaft

(56) Entgegenhaltungen:
- EP-A1- 2 808 289
- WO-A1-2008/014532
- JP-A- S59 207 304
- US-A1- 2013 209 203
- US-A1- 2017 066 592

## Beschreibung

Die Erfindung betrifft einen mobilen Kommissionierroboter zur automatischen Kommissionierung von Objekten mit einem vertikal ausgerichteten Hubmast und einem daran höhenbeweglich angebrachten, horizontal ausgerichteten Roboterarm mit einem Aufnahmewerkzeug zur Aufnahme der Objekte.

Unter Kommissionierung versteht man alle Methoden zur Zusammenstellung von bestimmten Objekten, insbesondere von Gütern in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Packstücke als zu kommissionierende Objekte von autonom betriebenen Transportfahrzeugen von einer Quellposition, z.B. einer Quellpalette, aufgenommen und auf einer auf dem Fahrzeug transportierten Zielpalette abgesetzt. Insbesondere werden hierzu mobile Kommissionierroboter verwendet, die die Packstücke selbstständig mittels Roboterarmen aufnehmen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann als Greifer, beispielsweise als Adhäsionsgreifer oder Vakuumgreifer, ausgebildet sein.

Für den vollautonomen, mobilen Kommissionierprozess werden sinnvollerweise Sonderkinematiken des Roboterarms eingesetzt. Roboter mit Standardkinematiken (insbesondere 6-Achs-Industrieroboter) sind zu schwer, nicht für den mobilen Einsatz konzipiert und haben kinematische Einschränkungen, die einen sinnvollen Einsatz in diesem Gebiet verhindern. Vorteilhafter sind Roboterarme mit flachen Kinematiken, die an einem Hubmast vertikal verfahren werden können. Derartige Roboterarme weisen mehrere flach, d.h. horizontal, angeordnete Armelemente auf, die einen zylindrischen Greifraum aufspannen, der sich für das Arbeiten in engen Lagerhäusern bestens eignet.

Ein großes Problem beim Kommissionieren ergibt sich durch den weit ausladenden Roboterarm. Da sich der Schwerpunkt des Kommissionierroboters beim Kommissionieren aus der Aufstandsfläche des Fahrzeugs heraus bewegen kann, kann es zu einer Beeinträchtigung der Standsicherheit kommen. Bei Kommissionierrobotern sind Armlängen des Roboterarms vom Hubmast bis zur Vorderkante des Aufnahmewerkzeugs von bis zu 2m nicht unüblich. Als Gegenmaßnahme wäre prinzipiell der Einsatz eines stationären Gegengewichts wie bei einem Gegengewichtsstapler denkbar. Dies ist aber bei Kommissionierrobotern nicht sinnvoll, da der Roboterarm nach vorne und zu beiden Seiten hin ausgelenkt werden kann. Ein mitdrehendes, am Hubmast befindliches Gegengewicht erscheint sehr aufwendig in der Umsetzung. Außerdem bedingt ein Gegengewicht höhere Antriebsleistungen und führt zu höherem Energieverbrauch, so dass sich die Einsatzzeiten des Kommissionierroboters verringern. Es erscheint daher sinnvoll, den Hubmast nicht vor dem Fahrzeug (wie bei Gegengewichtsgabelstaplern) und damit außerhalb der Aufstandsfläche des Kommissionierroboters anzubringen, sondern das Gewicht des Hubmastes selbst zur Erhöhung der Standsicherheit des Kommissionierroboters zu nutzen und in die Fahrzeugkontur des Kommissionierroboters zu ziehen. Damit ist jedoch die Zugänglichkeit der untersten Packstücke auf einer Quellpalette nicht mehr möglich, da der Kommissionierroboter höher als zum Beispiel eine Europalette (144 mm) ist.

Auch die obersten Packstücke einer Quellpalette sind nur schwer zugänglich, da der Abstand zur darüberliegenden Regalebene und deren Regaltraverse meist klein ist, um eine gute Auslastung des Lagers zu erreichen. Verschärft wird die Situation, wenn die Quellpaletten sehr hoch gepackt werden, die Packstücke auf der Quellpalette flach sind, oder wenn die Packstücke nur eine geringe Tiefe aufweisen und das hinterste Packstück damit sehr weit hinten liegt (Palettentiefe 1200 mm). Hier sind flach aufbauende Greifer sinnvoll, bzw. es muss der Greifer hinter die Traverse des Regals positioniert werden.

Weitere Probleme entstehen aus unterschiedlichen Anforderungen, was die Neigung (das Anstellen) eines als Greifer ausgebildeten Aufnahmewerkzeugs angeht. Insbesondere beim Greifprozess (Aufnahme des Packstücks) ist ein Anstellen des Greifers hilfreich, so dass der Greifer aus einer horizontalen Stellung nach vorne geneigt wird, also ein Nicken durchgeführt wird. Dies ist schon beim Anfahren an das aufzunehmende Packstück sinnvoll. Hierbei muss auf alle Fälle verhindert werden, dass beispielsweise durch Schrägstellen des Kommissionierroboters ein Kippen nach hinten (eine nach oben angestellte Lage) auftritt, weil sonst ein Unterfahren des aufzunehmenden Packstücks unmöglich wird. Unumgänglich wird ein solches Anstellen nach unten, wenn nicht die vorderste, sondern eine weiter hinten stehende Packstückreihe unterfahren werden soll.

Bei als Greifern ausgebildeten Aufnahmewerkzeugen, die das Packstück unterfahren, ist der Greifer während des Transportes zwischen Quell- und Zielpalette idealerweise in einer horizontalen Ausrichtung, um ein Abrutschen des Packstücks (insbesondere auch in einer Notbremssituation) zu verhindern.

Die US 2017/066592 A1 offenbart einen mobilen Kommissionierroboter zur automatischen Kommissionierung von Objekten mit einem vertikal ausgerichteten Hubgerüst und einem daran höhenbeweglich angebrachten, horizontal ausgerichteten Roboterarm mit einem Aufnahmewerkzeug zur Aufnahme der Objekte, wobei der Roboterarm mehrere Armelemente aufweist.

Die US 2013/209203 A1 offenbart ein Regalbediengerät, bei dem an einem vertikalen Mast ein Schubschlittenträger höhenverstellbar ist. An dem Schubschlittenträger ist eine Schwenkschubeinrichtung mit einer Lastgabel angeordnet, die eine Verstellung der Lastgabel in Querrichtung und eine Drehung der Lastgabel um eine vertikale Achse ermöglicht.

Die EP 2 808 289 A1 offenbart eine Gabelträgerneigungsvorrichtung für ein Flurförderzeug, die einen Hubschlitten umfasst, an dem der Gabelträger mittels Neigezylinder um eine horizontale Querachse neigbar ist.

Der vorliegenden Erfindung liegt die Aufgabe zugrunde, einen mobilen Kommissionierroboter der eingangs genannten Art so auszugestalten, dass die Aufnahme von Objekten erleichtert wird.

Diese Aufgabe wird erfindungsgemäß durch einen mobilen Kommissionierroboter zur automatischen Kommissionierung von Objekten mit einem vertikal ausgerichteten Hubmast und einem daran höhenbeweglich angebrachten, horizontal ausgerichteten Roboterarm mit einem Aufnahmewerkzeug zur Aufnahme der Objekte gelöst, wobei der Roboterarm mehrere Armelemente aufweist, die über Armgelenke mit vertikalen Armgelenksachsen verfügen, und wobei das Aufnahmewerkzeug über eine als Viergelenkkette ausgebildete Hub-Neige-Achse, die sowohl eine vom Roboterarm unabhängige Hubbewegung, als auch eine vom Roboterarm unabhängige Neigebewegung des Aufnahmewerkzeugs um eine horizontale Achse, d.h. ein Nicken, ermöglicht, mit dem Roboterarm verbunden ist, wobei die Hub-Neige-Achse als Viergelenkkette mit vier Gelenkpunkten mit horizontalen Gelenkachsen ausgebildet ist, wobei zwei Gelenkpunkte fest am Roboterarm angeordnet sind, während die beiden anderen Gelenkpunkte beweglich sind, und die beweglichen Gelenkpunkte einerseits mittels eines Kopplungselements gelenkig miteinander verbunden und andererseits jeweils über ein Verbindungselement mit jeweils einem der festen Gelenkpunkte gelenkig verbunden sind, und das Aufnahmewerkzeug am Kopplungselement angebracht ist.

Die vorhandene Grundkinematik des Roboterarms wird also durch eine kombinierte Hub-Neige-Achse erweitert, wodurch die Beweglichkeit des Aufnahmewerkzeugs, insbesondere eines Greifers, erheblich verbessert wird. Mit der Möglichkeit, das Aufnahmewerkzeug unabhängig vom Roboterarm anzuheben und abzusenken sowie in seiner Neigung zu verstellen, wird die Flexibilität beim Greifvorgang wesentlich erhöht. So können auch unter erschwerten Bedingungen, z.B. bei niedrigen Paletten oder schwer zugänglichen Objekten in engen Regalen, die Objekte schnell und sicher aufgenommen werden.

Die Hub-Neige-Achse ist erfindungsgemäß als ein von einer Viergelenkkette gebildetes Koppelgetriebe mit vier Gelenkpunkten mit horizontalen Gelenkachsen ausgebildet, wobei zwei Gelenkpunkte fest am Roboterarm angeordnet sind, während die beiden anderen Gelenkpunkte beweglich sind. Die beweglichen Gelenkpunkte sind einerseits mittels eines Kopplungselements gelenkig miteinander verbunden. Andererseits sind sie jeweils über ein Verbindungselement mit jeweils einem der festen Gelenkpunkte gelenkig verbunden. Das Aufnahmewerkzeug ist am Kopplungselement angebracht.

Aus der Geometrie der Hub-Neige-Achse ergibt sich die Kinematik bei der Handhabung der Objekte. Daher sind die Positionen der festen Gelenkpunkte am Roboterarm und die Längen der Verbindungselemente und des Kopplungselements sowie die Ausrichtung des Aufnahmewerkzeugs am Kopplungselement zweckmäßigerweise in bestimmter Weise gewählt. Und zwar sind sie so gewählt, dass bei Drehung der Verbindungselemente um die Gelenkachsen der festen Gelenkpunkte in eine Neutralposition das Aufnahmewerkzeug horizontal ausgerichtet ist, während sowohl bei Drehung der Verbindungselemente in eine angehobene Position als auch bei Drehung der Verbindungselemente in eine abgesenkte Position das Aufnahmewerkzeug vom Roboterarm wegweisend gegen die Horizontale nach unten geneigt ist.

Dabei wird gemäß einer besonders bevorzugten Ausgestaltung der Erfindung die Geometrie so gewählt, dass die festen Gelenkpunkte (A, D) und die beweglichen Gelenkpunkte (B, C) die Ecken eines in einer vertikalen Ebene aufgespannten Vierecks (A, B, C, D) mit oberer und unterer Längsseite (D-C, A-B) sowie roboterarmnaher und roboterarmferner Hochseite (A-D, B-C) bilden. Die obere Längsseite (D-C) ist hierbei länger als die untere Längsseite (A-B). Außerdem ist der obere feste Gelenkpunkt (D) gegenüber dem unteren festen Gelenkpunkt (A) in Richtung zum Roboterarm versetzt, so dass die roboterarmnahe Hochseite (A-D) nach oben hin gegen die Vertikale in Richtung zum Roboterarm geneigt ist. Andererseits ist die roboterarmferne Hochseite (B-C) kürzer als die roboterarmnahe Hochseite (A-D) und in der Neutralposition vertikal ausgerichtet. Mit dieser Geometrie ist die Bewegung der roboterarmfernen Hochseite (B-C) und damit des daran angeordneten Aufnahmewerkzeugs eindeutig definiert.

Der Antrieb dieser Kinematik kann auf verschiedene Weise erfolgen. Hierzu kann eines der Verbindungselemente oder das Kopplungselement mit einer Antriebseinrichtung versehen sein. Insbesondere kommen hierfür Linearaktoren (z.B. Pneumatikzylinder, Hydraulikzylinder oder elektrisch angetriebene Gewindespindeln) in Frage.

In einer vorteilhaften Ausgestaltung der Erfindung wird über ein weiteres Koppelgetriebe eines der Verbindungselemente mit einer Koppelstange und einem an einem Antriebsmotor befestigten Exzenter angetrieben.

Wird für ein alternatives Aufnahmewerkzeug, zum Beispiel einen anders ausgebildeten Greifer, eine abgeänderte Bewegungsform benötigt, so kann die von der Viergelenkkette gebildete Hub-Neige-Achse konstruktiv derart gestaltet werden, dass eine Adaption der Bewegung möglich ist. Eine solche Adaption ist beispielsweise dadurch denkbar, dass die Bauteile, die das Kopplungselement und das obere Verbindungselement bilden, ausgetauscht werden. Werden die Trennstellen entsprechend konstruiert, so ist sogar ein Wechsel im laufenden Betrieb mittels Schnellwechseleinrichtungen denkbar. Möglicher Anwendungsfall ist der Wechsel von einem Greifer, der das Packstück unterfährt, zu einem Vakuumgreifer, der von oben saugt. Ein solcher Wechsel ist sinnvoll, wenn sich das nächste Packstück mit diesem Greifertyp einfacher greifen lässt. Für einen Vakuumgreifer, der das Packstück nur von oben greift, ist ein Anstellen (Neigen) des Greifers nicht erforderlich. Der Hub kann aber aus vorgenannten Gründen dennoch sinnvoll sein. Hier genügt also eine Viergelenkkette in Form einer reinen Parallel-Kinematik.

In der Neutralstellung kann, z.B. über elektrisch angesteuerte Verriegelungen, zwischen der Parallel-Kinematik und der kombinierten Hub-Nickbewegung automatisch gewechselt werden.

Alternativ ist eine Adaption der Bewegung möglich und ermöglicht die Hub-Neige-Achse alternativ zu der kombinierten Hub-Neigebewegung des Aufnahmewerkzeugs eine Parallelführung des Aufnahmewerkzeugs, in der die Viergelenkkette eine Parallelkinematik aufweist, wenn die Viergelenkkette einen weiteren beweglichen Gelenkpunkt aufweist und einer der beweglichen Gelenkpunkt sowie der weitere Gelenkpunkt jeweils arretierbar ist. Die Viergelenkkette weist somit insgesamt fünf Gelenkpunkte auf, wobei drei Gelenkpunkte als bewegliche Gelenkpunkt ausgebildet sind, wobei ein Gelenkpunkt die Neigebewegung des Aufnahmewerkzeugs ermöglicht und der weitere Gelenkpunkt zu einer Parallelkinematik führt, die eine Parallelführung des des Aufnahmewerkzeugs ermöglicht. Hierzu ist bevorzugt der bewegliche Gelenkpunkt, der mit dem oberen Verbindungselement verbunden ist, doppelt vorhanden, ein erstes mal für die Neigebewegung und ein zweites mal für die Parallelkinematik. Durch wahlweises Arretieren des Gelenkpunktes oder des weiteren Gelenkpunktes kann somit entweder eine Viergelenkkette mit vier Gelenkpunkten gebildet werden, die die kombinierte Hub-Neigebewegung des Aufnahmewerkzeugs ermöglicht, oder alternativ eine Viergelenkkette mit vier Gelenkpunkten gebildet werden, die die Parallelführung des Aufnahmewerkzeugs erzielt werden.

Der weitere bewegliche Gelenkpunkt und der beweglichen Gelenkpunkt sind hierzu vorteilhafterweise jeweils mit einer lösbaren, insbesondere elektrisch lösbaren, Arretierungsvorrichtung, versehen, beispielsweis einer Bremseinrichtung oder einer Verrastungseinrichtung.

Die Umschaltung zwischen der kombinierten Hub-Nickbewegung und der Parallelkinamtaik durch entsprechende Ansteuerung der Arretierungsvorrichtungen erfolgt bevorzugt in einer Neutralstellung der Hub-Neige-Achse. Hierdurch ist ein Wechsel zwischen einem Betrieb mit einer kombinierten Hub-Neigebewegung des Aufnahmewerkzeugs und einer Parallel-Kinematik des Aufnahmewerkszeugs im laufenden Betrieb möglich ohne das Kopplungselement und das obere Verbindungselement austauschen zu müssen.

In einer zweckmäßigen Ausgestaltung, gemäß der der Roboterarm mehrere Armelemente aufweist, die über Armgelenke mit vertikalen Armgelenksachsen verfügen, ist zumindest die der Hub-Neige-Achse benachbarte Armgelenksachse mindestens mit einem Drehsensor, insbesondere einem absoluten Drehsensor, und die Hub-Neige-Achse mindestens mit einem Neigewinkelsensor, insbesondere einem absoluten Neigewinkelsensor, ausgestattet. Bei der der Hub-Neige-Achse benachbarten Armgelenksachse handelt es sich insbesondere um eine so genannte Handgelenksachse, die ein Schwenken des Aufnahmewerkzeugs um eine vertikale Achse ermöglicht. Um bei Drehungen um diese Achse eine Kollision zu vermeiden, sind die genannten Sensoren vorgesehen. Eine solche Kollision könnte bei nach unten ausgelenkter Hub-Neige-Achse auftreten. Die Kollisionsvermeidung kann in einer Fahrzeugsteuerung des Kommissionierroboters integriert werden und bei einer Bahnplanung des Aufnahmewerkzeugs berücksichtigt werden.

Bei flachen Armkinematiken kann der Roboterarm mehrere Armelemente aufweisen, die jeweils übereinander angeordnet sein. Die aufgebaute Höhe des Roboterarms wird durch die Hub-Neige-Achse wieder ausgeglichen. Das Übereinanderanordnen der Armelemente des Roboterarms ist sinnvoll, weil dadurch eine Vielfach-Dreh-Fähigkeit der einzelnen Achsen und Armelemente ermöglicht wird und so die Freiheitsgrade bei der Bahnplanung vergrößert werden.

Auch bei einer Inline-Anordnung der Armelemente des Roboterarms, bei der sich die Armelemente auf gleicher Höhe befinden, ist der Einsatz der Hub-Neige-Achse sinnvoll, um die Höhe der Plattform des Kommissionierroboters auszugleichen. Der Neigewinkel kann dementsprechend eingeschränkt werden.

Ist bei der erfindungsgemäßen Hub-Neige-Achse der Neigewinkel nach unten nicht ausreichend, so ist entweder das obere Verbindungselement konstruktiv so auszulegen, dass es nicht mit der Drehachse des unteren festen Gelenkpunkts kollidiert, oder das obere Verbindungselement muss seitlich am unteren festen Gelenkpunkt vorbei schwenken können.

In einer weiteren vorteilhaften Ausgestaltung weist die Hub-Neige-Achse mindestens einen eine Vorspannkraft aufbringenden Kraftspeicher, insbesondere eine Feder, zum Gewichtsausgleich auf. Das Leergewicht der Hub-Neige-Achse und des Aufnahmewerkzeugs und/oder zusätzlich zumindest noch ein Teil des Packstück-Gewichts kann somit ausgeglichen werden. Dadurch kann die Antriebsleistung für die Hub-Neige-Achse erheblich reduziert werden. Hierzu kann z.B. eine Zug-/Druck-Feder oder eine Torsionsfeder vorgesehen sein, die an unterschiedlichen Stellen angebracht werden können. Zum Beispiel kann eine Torsionsfeder an der festen unteren Gelenkachse oder eine Druckfeder am unteren Verbindungselement angeordnet sein.

Gemäß einer Weiterbildung des Erfindungsgedankens weist die Hub-Neige-Achse eine mit einer Steuerungseinrichtung in Wirkverbindung stehende Antriebseinrichtung auf. Dabei steht die Steuerungseinrichtung ihrerseits mit einem Schwingungssensor zur Erfassung von vertikalen Schwingungen in Wirkverbindung. Dabei ist der Schwingungssensor vorzugsweise am äußeren Ende des Roboterarms bzw. am äußeren Ende des Aufnahmewerkzeugs angeordnet. Außerdem ist die Steuerungseinrichtung dazu eingerichtet, die Sensordaten auszuwerten und die Antriebseinrichtung so anzusteuern, dass die Schwingungen durch Gegenschwingungen ausgeglichen werden. Auf diese Weise kann die Hub-Neige-Achse zum Ausgleich von Schwingungen am Roboterarm genutzt werden. Dabei ist es beim Auftreten von vertikalen Schwingungen des Roboterarms nicht vorrangiges Ziel, die Schwingungen zu dämpfen, sondern die detektieren Schwingungen, insbesondere am äußeren Ende des Aufnahmewerkzeugs, also z.B. an der Greiferspitze, durch Gegenschwingungen mittels der Hub-Neige-Achse z.B. im Punkt der Greiferspitze destruktiv zu überlagern und damit trotz schwingendem Roboterarm eine sichere Kontaktierung und Aufnahme des Objekts zu ermöglichen.

Die Erfindung eignet sich zum Picken, also zum Greifen von Objekten, im Rahmen des Kommissionierprozesses und zum Ablegen der Objekte auf einem Zielladungsträger, z.B. einer Zielpalette. Hierzu gehört z.B. das Picken von Packstücken aus Regalen. Insbesondere ist die Erfindung für den Einsatz in Lagerhäusern und Regalgängen mit engen Wegen mit Überhohl- und Begegnungsverkehr und/oder engen Kurvenradien sowie in Gängen mit beidseitig angeordneten Regalen, die beide bedient werden sollen ("Z-Picken" mit Wechsel der Gangseite), geeignet. Auch für eine flächenoptimierte und/oder zeitoptimierte Bewirtschaftung mit daraus folgenden schnellen Fahrgeschwindigkeiten kann die Erfindung mit Erfolg eingesetzt werden. Ebenso ist eine raumoptimierte Bestückung der Regale möglich (geringe Freiräume zu seitlichen Regalständern und geringe Freiräume zu darüber auf Regal-Traversen eingestapelten Ladungsträgern in der zweiten Regalebene). Außerdem eignet sich die Erfindung für eine gemischte Bewirtschaftung mit manuellen und autonomen Pickern. Der Hubmast, an dem der Roboterarm in vertikaler Richtung verstellbar ist, kann stabilitätsgünstig auf dem Kommissionierroboter innerhalb der Fahrzeugkontur des Kommissionierroboters angeordnet werden.

Die Erfindung bietet eine ganze Reihe von Vorteilen:
Der Hubmast des Kommissionierroboters muss weniger hoch bauen, da der letzte Hub auch durch die Hub-Neige-Achse erfolgen kann. Dabei kann der Hubmast innerhalb der Fahrzeugkontur auf die Plattform des Kommissionierroboters gebaut werden und dennoch wird die unterste Packstücklage erreicht. Dadurch wird eine wesentliche Erhöhung der Standsicherheit des Kommissionierroboters erreicht. Außerdem kann der mobile Kommissionierroboter auch bei sehr hoch gestapelten Quellpaletten und damit sehr schmalen Freiräumen zwischen Packstück und darüberliegender Regaltraverse eingesetzt werden. Dabei können sogar Teile des Greifers von unten zwischen die Regaltraversen eintauchen. Der Greifer kann geneigt (nach vorne angestellt werden) werden, um ein besseres Untergreifen der aufzunehmenden Packstücke zu ermöglichen. Das erhöht die Freiheit bei der Konzeptionierung eines Greifers. So genannte Unterfahrgreifer, die die universellste Art der Greifer darstellen, werden dadurch überhaupt erst in der Praxis einsetzbar. Die Neigung des Greifers kann verstellt werden, um je nach Prozessschritt (Greifen oder Verfahren) die optimale Neigung aufzuweisen. Außerdem kann durch die Beweglichkeit nach oben oder unten die tatsächliche Hubgeschwindigkeit des Kommissionierroboters erhöht werden. Legt der Kommissionierroboter ein Packstück ganz unten auf der Zielpalette ab und muss er danach ganz oben aus der nächsten Quellpalette greifen, so kann der Hub des Roboterarms am Hubmast und der Hub der Hub-Neige-Achse überlagert gefahren werden. Ferner kann die Hub-Neige-Achse zum Ausgleich von Schwingungen genutzt werden. Bei flachen Armkinematiken aus mehreren Armelementen können die Armelemente jeweils übereinander angeordnet werden. Die aufgebaute Höhe wird durch die Hub-Neige-Achse wieder ausgeglichen. Schließlich kann die Hub- und Neigefunktion über nur einen Aktor dargestellt werden. Dadurch ergeben sich geringere Systemkosten, ein reduzierter Steuerungsaufwand und eine geringere Masse des Gesamtsystems, wodurch auch der Energieverbrauch reduziert wird.

Weitere Vorteile und Einzelheiten der Erfindung werden anhand der in den schematischen Figuren dargestellten Ausführungsbeispiele näher erläutert. Hierbei zeigt
- Figur 1: eine Seitenansicht eines erfindungsgemäßen Kommissionierroboters (ohne autonomer Transportplattform und ohne Hubmast dargestellt) während des Greifvorgangs,
- Figur 2: die Topologie der Viergelenkkette,
- Figur 3: die Bemaßung der Viergelenkkette,
- Figur 4: den Antrieb der Viergelenkkette,
- Figur 5: eine alternative Viergelenkkette als Parallel-Kinematik und
- Figur 6: eine alternative Viergelenkkette mit zusätzlicher Parallel-Kinematik.

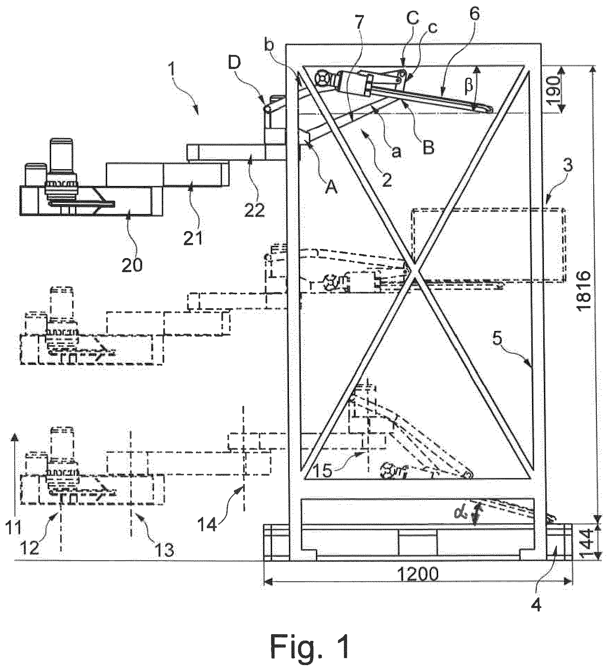

In der Figur 1 ist ein erfindungsgemäßer Kommissionierroboter ohne autonome, fahrende Transportplattform und ohne Hubmast dargestellt. Gezeigt ist in der Figur 1 der Teil des Kommissionierroboters, der den am Hubmast vertikal anhebbaren und absenkbaren Roboterarm 1, die Hub-Neige-Achse 2 und das als Greifer 6 ausgebildete Aufnahmewerkzeug 6 umfasst.

Der Roboterarm 1 besteht aus mehreren, übereinander angeordneten Armelementen 20, 21, 22. Die Armelemente 20, 21, 22 weisen Armgelenke mit vertikalen Armgelenkachsen 12, 13, 14, 15 auf. Der nicht dargestellte Hubmast bildet die vertikale Hubachse 11. Die Drehachse, die unmittelbar am nicht gezeigten Hubschlitten des Hubmastes befestigt ist, bildet die Armgelenkachse 12. Über die weiteren Armgelenkachsen 13 und 14 sind die Armelemente 20, 21, 22 gelenkig miteinander verbunden. Die Handgelenksachse 15 ermöglicht schließlich noch eine Drehung des Greifers 6 um eine vertikale Achse.

Diese Grundkinematik wird erfindungsgemäß durch die zusätzliche Hub-Neige-Achse 2 erweitert, die sowohl einen Hub, als auch Nicken (Drehen um eine horizontale Achse) des Greifers 6 ermöglicht.

Während des Greifvorgangs werden - wie in der Figur 1 dargestellt ist - Objekte 3, insbesondere Packstücke 3, von sortenreinen Quellpaletten 4 aus dem Regal 5 entnommen. Anschließend werden diese Packstücke 3 auf einer in der Figur nicht dargestellten Zielpalette abgestellt. Auf der Zielpalette entsteht ein nicht sortenreines, gemischtes Packmuster aus Packstücken 3 von diversen Quellpaletten 4, das kundenspezifisch zusammengestellt wird. Die Zielpalette wird entweder ebenfalls auf der autonomen Transportplattform des Kommissionierroboters mitgeführt oder wird durch ein begleitendes autonomes Fahrzeug bereitgehalten. Weiterhin kann das aufgenommene Packstück 3 auch einer stationären Kommissionieranlage zugeführt werden.

Die Figur 1 zeigt den Roboterarm 1 dabei in drei verschiedenen Höhen am nicht dargestellten Hubmast. In der untersten Position befindet sich der Roboterarm 1 am untersten Ende des Hubmastes und damit unmittelbar über dem Chassis der autonomen Transportplattform des Kommissionierroboters. Die Hub-Neige-Achse 2 ist hier nach unten in eine abgesenkte Position ausgelenkt, um ein Packstück 3 aus der untersten Lage zu greifen. In der abgesenkten Position der Hub-Neige-Achse 2 wird eine Anstellung des Greifers 6 (ein Nicken nach vorne) um den Winkel α gegenüber der Horizontalen erreicht, was die Aufnahme bzw. das Unterfahren der Packstücke 3 erleichtert. Die mittlere Situation stellt den Roboterarm 1 und die Hub-Neige-Achse 2 in der Neutralposition dar. In der Neutralposition ist der Greifer 6 nicht geneigt und horizontal ausgerichtet. Diese Neutralposition eignet sich zum Verfahren des Roboterarmes mit dem aufgenommenen Packstück 3. Die obere Situation zeigt den Roboterarm 1 in der obersten Position am Hubmast. Zusätzlich ist die Hub-Neige-Achse 2 nach oben in eine angehobene Position ausgelenkt, um selbst ein flaches Packstück 3 aus einer hinteren, oberen Position auf der Quellpalette 4 greifen zu können. Da Quellpaletten 4 der zweiten Lagerebene in der Regel auf zwei Regaltraversen am vorderen und hinteren Ende des Regals 5 stehen, wäre sogar eine noch höhere Position des Roboterarmes 1 denkbar, ohne dass es zu Kollisionen kommt. Dabei wäre der Greifer 6 zwischen den beiden Regaltraversen positioniert. Auch in dieser oberen Position der Hub-Neige-Achse 2 wird eine Anstellung des Greifers 6 (ein Nicken nach vorne) um den Winkel β gegenüber der Horizontalen erreicht, was die Aufnahme bzw. das Unterfahren der Packstücke 3 erleichtert.

Die Hub- und Nick-Bewegung der Hub-Neige-Achse 2 wird durch ein als Viergelenkkette 7 ausgebildetes Koppelgetriebe gebildet. Die Viergelenkkette 7 hat zwei feste Gelenkpunkte A, D am Roboterarm 1 und zwei bewegliche Gelenkpunkte C, B am oberen und unteren Ende eines als Flansch ausgebildeten Koppelelements c, an dem der Greifer 6 befestigt ist.

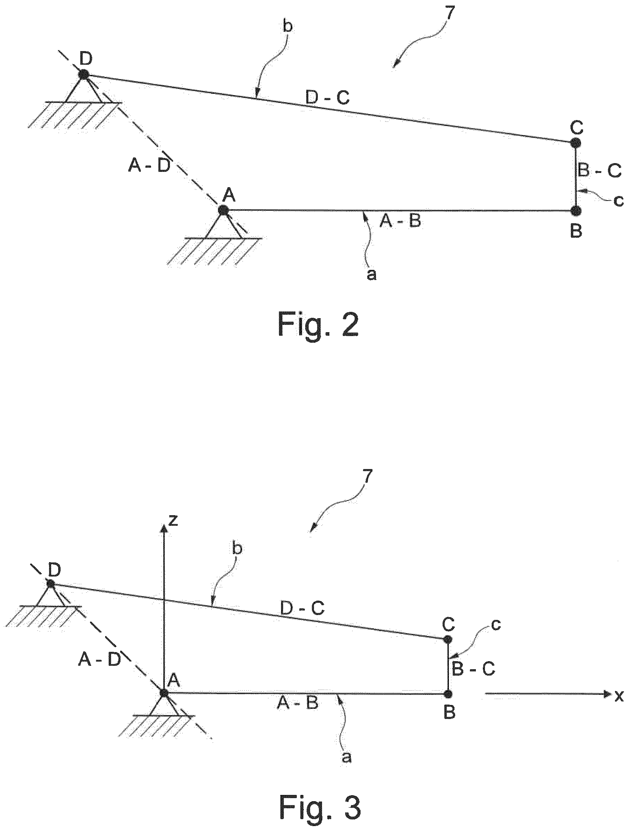

Die Figur 2 zeigt eine schematische Darstellung der Viergelenkkette 7 aus Figur 1 mit den festen Gelenkpunkten A und D und den beweglichen Gelenkpunkten B und C. Dabei bildet das als Stab ausgebildete Verbindungselement a zwischen den Gelenkpunkten A und B eine angetriebene Schwinge und kann also als Lenker der Viergelenkkette 7 bezeichnet werden. Auch das als Stab ausgebildete Verbindungselement b zwischen den Gelenkpunkten C und D bildet eine Schwinge. Das als Flansch ausgebildete Kopplungselement c zwischen den Gelenkpunkten B und C bildet die Koppel der Viergelenkkette 7. Die Ansicht ist in Figur 2 analog zur Figur 1 gewählt. Durch die Positionierung der festen Gelenkpunkte A und D in einem Roboterarm-festen Koordinatensystem und durch die Längen der drei Kettenglieder a, b, c der Viergelenkkette 7 ist die Bewegung des Kopplungselements c und damit des daran angebrachten, in der Figur 2 nicht dargestellten, Greifers eindeutig definiert. Dabei ist die Geometrie der Viergelenkkette 7 so gewählt, dass die festen Gelenkpunkte A, D und die beweglichen Gelenkpunkte B, C die Ecken eines in einer vertikalen Ebene aufgespannten Vierecks A, B, C, D mit oberer und unterer Längsseite D-C, A-B sowie roboterarmnaher und roboterarmferner Hochseite A-D, B-C bilden. Die obere Längsseite D-C ist hierbei länger als die untere Längsseite A-B. Außerdem ist der obere feste Gelenkpunkt D gegenüber dem unteren festen Gelenkpunkt A in Richtung zum Roboterarm versetzt, so dass die roboterarmnahe Hochseite A-D nach oben hin gegen die Vertikale in Richtung zum Roboterarm geneigt ist. Andererseits ist die roboterarmferne Hochseite B-C kürzer als die roboterarmnahe Hochseite A-D und in der Neutralposition vertikal ausgerichtet. Mit dieser Geometrie ist die Bewegung der roboterarmfernen Hochseite B-C und damit des daran angeordneten Aufnahmewerkzeugs eindeutig definiert. Bei gerader, stabförmiger Ausbildung der Verbindungselemente a und b sowie des Kopplungselements c entsprechen sich die physischen Längen a, b, c und die abstrakten Seiten A-B, D-C, B-C des Vierecks. Die Verbindungselemente a, b können aber auch ungerade, z.B. geknickt oder gekrümmt, ausgebildet sein. In diesem Fall sind für die korrekte Geometrie die abstrakten Seiten A-B, D-C, B-C des Vierecks und nicht die physischen Längen a, b, c maßgeblich.

In der Figur 3 ist die Bemaßung der Viergelenkkette 7 aus Figur 2 dargestellt. Im vorliegenden Ausführungsbeispiel sind die Koordinaten x/z in der Neutralposition, in der die roboterarmfernen Hochseite B-C und somit das Kopplungselement c vertikal ausgerichtet ist, folgendermaßen definiert:

| | |
|---|---|
| Gelenkpunkt A: | x = 0 mm / z = 0 mm |
| Gelenkpunkt B: | x = 400 mm / z = -10 mm |
| Gelenkpunkt C: | x = 400 mm / z = 90 mm |
| Gelenkpunkt D: | x= -161 mm / z= 121 mm |

Mit einer derart ausgestalteten Viergelenkkette 7 werden die in Figur 1 gezeigten Positionen erreicht.

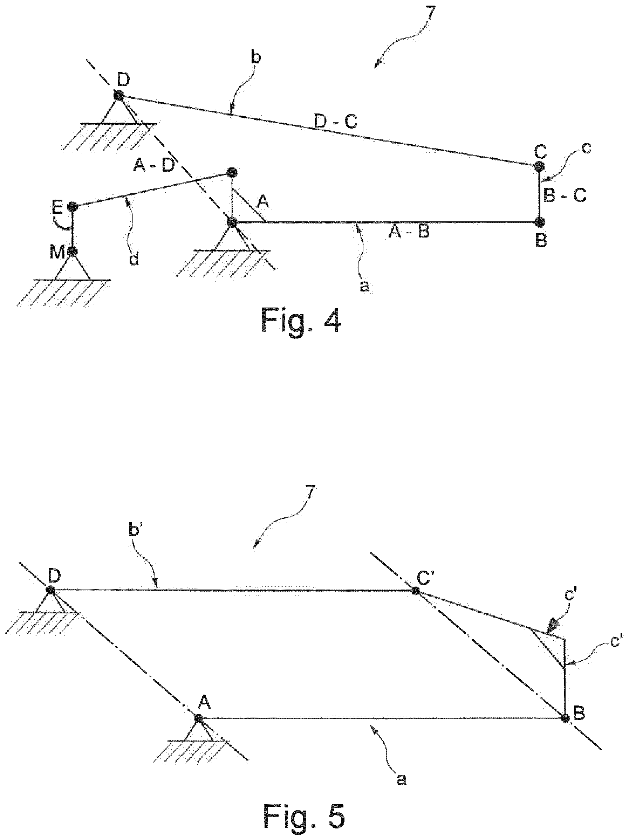

Die Figur 4 zeigt den Antrieb der Viergelenkkette 7. Der Antrieb dieser Kinematik kann auf verschiedene Weise erfolgen. Insbesondere kommen Linearaktoren (Pneumatikzylinder, Hydraulikzylinder oder elektrisch angetriebene Gewindespindeln) an verschiedenen Angriffspunkten in Frage. Vorteilhaft wird eine Linearbewegung zwischen den Gelenkpunkten A und C aufgeprägt. Ebenso kann zwischen B und D die Bewegung aufgeprägt werden, sowie auch zwischen Punkten auf den Verbindungselementen a oder b oder dem Kopplungselement c oder zu einem Fixpunkt am Roboterarm hin. Im vorliegenden Ausführungsbeispiel wird über ein weiteres Koppelgetriebe das als Lenker ausgebildete Verbindungselement a mit einer Koppelstange d von einem an einem Antriebsmotor M befestigten Exzenter E angetrieben.

In der Figur 5 ist eine alternative Viergelenkkette 7 als Parallel-Kinematik gezeigt. Dabei sind die obere Längsseite D-C' und die untere Längsseite A-B sowie die roboterarmnahe Hochseite A-D und die roboterarmferne Hochseite B-C' parallel ausgerichtet. Im Vergleich zu den Figuren 1-4 ist somit der Gelenkpunkt C in den Gelenkpunkt C' geändert und verschoben. Wird für ein alternatives Aufnahmewerkzeug, zum Beispiel einen anders ausgebildeten Greifer, eine abgeänderte Bewegungsform der Viergelenkkette 7 benötigt, so kann die von der Viergelenkkette 7 gebildete Hub-Neige-Achse 2 konstruktiv derart gestaltet werden, dass eine Adaption der Bewegung möglich ist. Eine solche Adaption ist beispielsweise dadurch denkbar, dass die Bauteile, die das Kopplungselement c und das obere Verbindungselement b bilden, gegen ein Kopplungselement c' und ein oberes Verbindungselement b' ausgetauscht werden, um die Parallel-Kinematik der Figur 5 zu erzielen. Werden die Trennstellen entsprechend entsprechend konstruiert, so ist sogar ein Wechsel im laufenden Betrieb mittels Schnellwechseleinrichtungen denkbar. Möglicher Anwendungsfall ist der Wechsel von einem Greifer, der das Packstück unterfährt, zu einem Vakuumgreifer, der von oben saugt. Ein solcher Wechsel ist sinnvoll, wenn sich das nächste Packstück mit diesem Greifertyp einfacher greifen lässt. Für einen Vakuumgreifer, der das Packstück nur von oben greift, ist ein Anstellen (Neigen) des Greifers mit der Viergelenkkette 7 nicht erforderlich. Der Hub der Viergelenkkette 7 kann hierbei sinnvoll sein. Hier genügt also eine Viergelenkkette 7 in Form einer reinen Parallel-Kinematik, wie in der Figur 5 dargestellt ist.

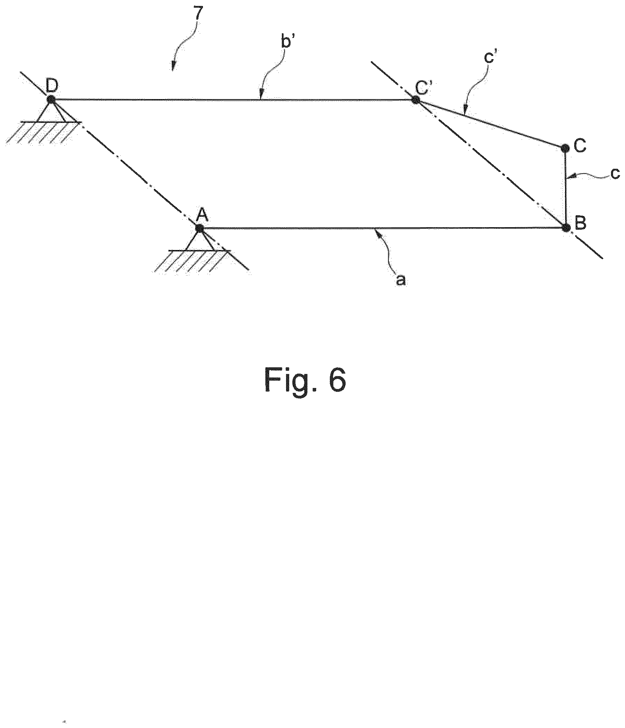

In der Figur 6 ist eine Ausführungsform der Erfindung dargestellt, die eine Adaption der Bewegung ermöglicht und alternativ die Hub-Neige-Achse 2 der Figuren 1 bis 4 mit der kombinierten Hub-Neigebewegung des Greifers 6 oder die Parallel-Kinematik mit der Parallelführung der Figur 5 und der reinen Hubbewegung des Greifers 6 ermöglicht.

Die Viergelenkkette 7 mit den Gelenkpunkten A, B, C, D der Figuren 1 bis 4 ist hierzu zusätzlich mit dem weiteren Gelenkpunkt C' der Figur 5 versehen. Die Viergelenkkette 7 der Figur 6 ist aus dem unteren Verbindungselement a und dem als Flansch ausgebildete Kopplungselement c der Figuren 1 bis 4 sowie dem oberen Verbindungselement b' der Figur 5 und einem zusätzlichen Verbindungselement c' zwischen den Gelenkpunkten C und C' gebildet. Der weitere bewegliche Gelenkpunkt C' und der bewegliche Gelenkpunkt C sind jeweils arretierbar. Die Viergelenkkette 7 weist somit insgesamt fünf Gelenkpunkte A, B, C, D, C' auf, wobei drei Gelenkpunkte B, C, C' als bewegliche Gelenkpunkte ausgebildet sind. Der Gelenkpunkt C ermöglicht die kombinierten Hub-Neigebewegung des Aufnahmewerkzeugs 6 und der weitere Gelenkpunkt C' führt zu einer Parallelkinematik, der eine reine Hubbewegung und Parallelführung des Aufnahmewerkzeugs 6 ermöglicht.

In der Figur 6 ist somit der Gelenkpunkt C, C' doppelt vorhanden, einmal als Gelenkpunkt C für die kombinierten Hub-Neigebewegung und ein zweites als Gelenkpunkt C' für die Parallelkinematik.

Der weitere bewegliche Gelenkpunkt C' und der beweglichen Gelenkpunkt C sind jeweils mit einer nicht näher dargestellten lösbaren, insbesondere elektrisch lösbaren, Arretierungsvorrichtung, versehen, beispielsweis einer Bremseinrichtung oder einer Verrastungseinrichtung. Durch wahlweises Arretieren des Gelenkpunktes C oder des weiteren Gelenkpunktes C' kann somit entweder eine Viergelenkkette 7 mit den vier Gelenkpunkten A, B, C, D gebildet werden (Arretierungseinrichtung an Gelenkpunkt C ist geöffnet und Arretierungseinrichtung an Gelenkpunkt C' ist arretiert), die die kombinierten Hub-Neigebewegung des Aufnahmewerkzeugs 6 analog zu den Figuren 1 bis 4 ermöglicht, oder alternativ eine Viergelenkkette 7 mit den vier Gelenkpunkten A, B, C', D gebildet werden (Arretierungseinrichtung an Gelenkpunkt C' ist geöffnet und Arretierungseinrichtung an Gelenkpunkt C ist arretiert), die die Parallelführung des Aufnahmewerkzeugs 7 analog zur Figur 5 ermöglicht.

Die Umschaltung zwischen der kombinierten Hub-Nickbewegung und der Parallelkinamtaik kann hierbei durch entsprechende Ansteuerung der Arretierungsvorrichtungen an den Gelenkpunkten C, C' erfolgen, bevorzugt in einer Neutralstellung der Hub-Neige-Achse 2. Hierdurch ist ein Wechsel zwischen einem Betrieb mit einer Neigebewegung des Aufnahmewerkzeugs 6 und einer Parallel-Kinematik des Aufnahmewerkszeugs 6 im laufenden Betrieb möglich ohne das Kopplungselement c und das obere Verbindungselement b austauschen zu müssen.

## Patentansprüche

1. Mobiler Kommissionierroboter zur automatischen Kommissionierung von Objekten mit einem vertikal ausgerichteten Hubmast und einem daran höhenbeweglich angebrachten, horizontal ausgerichteten Roboterarm mit einem Aufnahmewerkzeug zur Aufnahme der Objekte, wobei der Roboterarm (1) mehrere Armelemente (20, 21, 22) aufweist, die über Armgelenke (12, 13, 14, 15) mit vertikalen Armgelenksachsen verfügen, und wobei das Aufnahmewerkzeug (6) über eine als Viergelenkkette (7) ausgebildete Hub-Neige-Achse (2), die sowohl eine vom Roboterarm (1) unabhängige Hubbewegung, als auch eine vom Roboterarm (1) unabhängige Neigebewegung des Aufnahmewerkzeugs (6) um eine horizontale Achse ermöglicht, mit dem Roboterarm (1) verbunden ist, wobei die Hub-Neige-Achse (2) als Viergelenkkette (7) mit vier Gelenkpunkten (A, B, C, D) mit horizontalen Gelenkachsen ausgebildet ist, wobei zwei Gelenkpunkte (A, D) fest am Roboterarm (1) angeordnet sind, während die beiden anderen Gelenkpunkte (C, B) beweglich sind, und die beweglichen Gelenkpunkte (C, B) einerseits mittels eines Kopplungselements (c) gelenkig miteinander verbunden und andererseits jeweils über ein Verbindungselement (a, b) mit jeweils einem der festen Gelenkpunkte (A, D) gelenkig verbunden sind, und das Aufnahmewerkzeug (6) am Kopplungselement (c) angebracht ist.

2. Mobiler Kommissionierroboter nach Anspruch 1, **dadurch gekennzeichnet, dass** die Positionen der festen Gelenkpunkte (A, D) am Roboterarm (1) und die Längen der Verbindungselemente (a, b) und des Kopplungselements (c) sowie die Ausrichtung des Aufnahmewerkzeugs (6) am Kopplungselement (c) derart gewählt sind, dass bei Drehung der Verbindungselemente (a, b) um die Gelenkachsen der festen Gelenkpunkte (A, D) in eine Neutralposition das Aufnahmewerkzeug (6) horizontal ausgerichtet ist, während sowohl bei Drehung der Verbindungselemente (a, b) in eine angehobene Position als auch bei Drehung der Verbindungselemente (a, b) in eine abgesenkte Position das Aufnahmewerkzeug (6) vom Roboterarm (1) wegweisend gegen die Horizontale nach unten geneigt ist.

3. Mobiler Kommissionierroboter nach Anspruch 2, **dadurch gekennzeichnet, dass** die festen Gelenkpunkte (A, D) und die beweglichen Gelenkpunkte (B, C) die Ecken eines in einer vertikalen Ebene aufgespannten Vierecks (A, B, C, D) mit oberer und unterer Längsseite (D-C, A-B) sowie roboterarmnaher und roboterarmferner Hochseite (A-D, B-C) bilden, wobei die obere Längsseite (D-C) länger ist als die untere Längsseite (A-B) und der obere feste Gelenkpunkt (D) gegenüber dem unteren festen Gelenkpunkt (A) in Richtung zum Roboterarm (1) versetzt ist, so dass die roboterarmnahe Hochseite (A-D) nach oben hin gegen die Vertikale in Richtung zum Roboterarm (1) geneigt ist, und die roboterarmferne Hochseite (B-C) kürzer als die roboterarmnahe Hochseite (A-D) und in Neutralposition vertikal ausgerichtet ist.

4. Mobiler Kommissionierroboter nach einem der Ansprüche 1 bis 3, **dadurch gekennzeichnet, dass** eines der Verbindungselemente (a, b) oder das Kopplungselement (c) mit einer Antriebseinrichtung versehen ist.

5. Mobiler Kommissionierroboter nach einem der Ansprüche 1 bis 4, **dadurch gekennzeichnet, dass** mindestens eines der Verbindungselemente (a, b) und/oder das Kopplungselement (c) mit dem daran angebrachten Aufnahmewerkzeug (6) auswechselbar ausgebildet ist.

6. Mobiler Kommissionierroboter nach einem der Ansprüche 1 bis 4, **dadurch gekennzeichnet, dass** die Hub-Neige-Achse (2) alternativ zu der Neigebewegung des Aufnahmewerkzeugs (6) eine Parallelführung des Aufnahmewerkzeugs (6) ermöglicht, in der die Viergelenkkette (7) eine Parallelkinematik aufweist, wobei die Viergelenkkette (7) einen weiteren beweglichen Gelenkpunkt (C') aufweist und einer der beweglichen Gelenkpunkt (C) sowie der weitere Gelenkpunkt (C') jeweils arretierbar ist.

7. Mobiler Kommissionierroboter nach einem der Ansprüche 1 bis 6, **dadurch gekennzeichnet, dass** zumindest die der Hub-Neige-Achse benachbarte Armgelenksachse (15) mindestens mit einem Drehsensor und die Hub-Neige-Achse mindestens mit einem Neigewinkelsensor ausgestattet ist.

8. Mobiler Kommissionierroboter nach einem der Ansprüche 1 bis 7, **dadurch gekennzeichnet, dass** der Roboterarm (1) mehrere Armelemente (20, 21, 22) aufweist, die übereinander angeordnet sind.

9. Mobiler Kommissionierroboter nach einem der Ansprüche 1 bis 7, **dadurch gekennzeichnet, dass** der Roboterarm (1) mehrere Armelemente (20, 21, 22) aufweist, die auf gleicher Höhe angeordnet sind.

10. Mobiler Kommissionierroboter nach einem der Ansprüche 1 bis 9, **dadurch gekennzeichnet, dass** die Hub-Neige-Achse (2) mindestens einen eine Vorspannkraft aufbringenden Kraftspeicher, insbesondere eine Feder, zum Gewichtsausgleich aufweist.

11. Mobiler Kommissionierroboter nach einem der Ansprüche 1 bis 10, **dadurch gekennzeichnet, dass** die Hub-Neige-Achse (2) eine mit einer Steuerungseinrichtung in Wirkverbindung stehende Antriebseinrichtung aufweist, und die Steuerungseinrichtung ihrerseits mit einem Schwingungssensor zur Erfassung von vertikalen Schwingungen in Wirkverbindung steht und dazu eingerichtet ist, die Sensordaten auszuwerten und die Antriebseinrichtung so anzusteuern, dass die Schwingungen durch Gegenschwingungen ausgeglichen werden.

## Claims

1. Mobile order-picking robot for automatically picking objects, comprising a vertically oriented lifting mast and a horizontally oriented robot arm which is attached thereto in a vertically movable manner and has a pick-up tool for picking up the objects, wherein the robot arm (1) has a plurality of arm elements (20, 21, 22) which have arm joints (12, 13, 14, 15) with vertical arm joint axes, and wherein the pick-up tool (6) is connected to the robot arm (1) by means of a lifting and tilting shaft (2) which is configured as a four-bar chain (7) and allows both a lifting movement, which is independent of the robot arm (1), and also a tilting movement, which is independent of the robot arm (1), of the pick-up tool (6) about a horizontal axis, wherein the lifting and tilting shaft (2) is configured as a four-bar chain (7) with four articulation points (A, B, C, D) with horizontal articulation axes, wherein two articulation points (A, D) are fixedly arranged on the robot arm (1) while the other two articulation points (C, B) are movable, and the movable articulation points (C, B) are firstly connected to one another in an articulated manner by means of a coupling element (c) and secondly are each connected in an articulated manner to in each case one of the fixed articulation points (A, D) by means of a connecting element (a, b), and the pick-up tool (6) is fitted to the coupling element (c).

2. Mobile order-picking robot according to Claim 1, **characterized in that** the positions of the fixed articulation points (A, D) on the robot arm (1) and the lengths of the connecting elements (a, b) and of the coupling element (c) and also the orientation of the pick-up tool (6) on the coupling element (c) are selected in such a way that, when the connecting elements (a, b) are rotated about the articulation axes of the fixed articulation points (A, D) to a neutral position, the pick-up tool (6) is oriented horizontally, whereas both when the connecting elements (a, b) are rotated to a raised position and also when the connecting elements (a, b) are rotated to a lowered position, the pick-up tool (6) is tilted downwards with respect to the horizontal in a manner facing away from the robot arm (1).

3. Mobile order-picking robot according to Claim 2, **characterized in that** the fixed articulation points (A, D) and the movable articulation points (B, C) form the corners of a polygon (A, B, C, D) which is spread out in a vertical plane and has an upper longitudinal side (D-C) and a lower longitudinal side (A-B) and also a vertical side (A-D) close to the robot arm and a vertical side (B-C) remote from the robot arm, wherein the upper longitudinal side (D-C) is longer than the lower longitudinal side (A-B) and the upper fixed articulation point (D) is offset in relation to the lower fixed articulation point (A) in the direction of the robot arm (1), so that the vertical side (A-D) close to the robot arm is tilted upwards with respect to the vertical in the direction of the robot arm (1), and the vertical side (B-C) remote from the robot arm is shorter than the vertical side (A-D) close to the robot arm and is oriented vertically in the neutral position.

4. Mobile order-picking robot according to one of Claims 1 to 3, **characterized in that** one of the connecting elements (a, b) or the coupling element (c) is provided with a drive device.

5. Mobile order-picking robot according to one of Claims 1 to 4, **characterized in that** at least one of the connecting elements (a, b) and/or the coupling element (c) with the pick-up tool (6) fitted to it is configured to be exchangeable.

6. Mobile order-picking robot according to one of Claims 1 to 4, **characterized in that** the lifting and tilting shaft (2) allows, as an alternative to the tilting movement of the pick-up tool (6), parallel guidance of the pick-up tool (6), during which the four-bar chain (7) exhibits parallel kinematics, wherein the four-bar chain (7) has a further movable articulation point (C') and one of the movable articulation points (C) and the further articulation point (C') can each be locked.

7. Mobile order-picking robot according to one of Claims 1 to 6, **characterized in that** at least the arm articulation axis (15), which is adjacent to the lifting and tilting shaft, is equipped at least with a rotation sensor and the lifting and tilting shaft is equipped at least with an angle of inclination sensor.

8. Mobile order-picking robot according to one of Claims 1 to 7, **characterized in that** the robot arm (1) has a plurality of arm elements (20, 21, 22) which are arranged one above the other.

9. Mobile order-picking robot according to one of Claims 1 to 7, **characterized in that** the robot arm (1) has a plurality of arm elements (20, 21, 22) which are arranged at the same height.

10. Mobile order-picking robot according to one of Claims 1 to 9, **characterized in that** the lifting and tilting shaft (2) has at least one energy store which applies a pretensioning force, in particular a spring, for weight equalization.

11. Mobile order-picking robot according to one of Claims 1 to 10, **characterized in that** the lifting and tilting shaft (2) has a drive device which is operatively connected to a control device, and the control device for its part is operatively connected to a vibration sensor for detecting vertical vibrations and is designed to evaluate the sensor data and to actuate the drive device such that the vibrations are compensated for by counter-vibrations.

## Revendications

1. Robot de préparation de commandes mobile pour la préparation automatique de commandes d'objets avec un mât de levage orienté verticalement et un bras de robot orienté horizontalement, disposé de manière mobile en hauteur sur celui-ci, avec un outil de réception pour la réception des objets, le bras de robot (1) présentant plusieurs éléments de bras (20, 21, 22) qui disposent d'articulations de bras (12, 13, 14, 15) avec des axes d'articulation de bras verticaux, et l'outil de réception (6) étant relié au bras de robot (1) par le biais d'un axe de levage et d'inclinaison (2) configuré sous forme de chaîne à quatre articulations (7), qui permet aussi bien un mouvement de levage indépendant du bras de robot (1) qu'un mouvement d'inclinaison de l'outil de réception (6) autour d'un axe horizontal indépendant du bras de robot (1), l'axe de levage et d'inclinaison (2) étant configuré sous forme de chaîne à quatre articulations (7) avec quatre points d'articulation (A, B, C, D) avec des axes d'articulation horizontaux, deux points d'articulation (A, D) étant agencés de manière fixe sur le bras du robot (1), tandis que les deux autres points d'articulation (C, B) sont mobiles, et les points d'articulation mobiles (C, B) étant, d'une part, reliés entre eux de manière articulée au moyen d'un élément d'accouplement (c) et, d'autre part, reliés chacun de manière articulée à l'un des points d'articulation fixes (A, D) par le biais d'un élément de liaison (a, b), et l'outil de réception (6) étant disposé sur l'élément d'accouplement (c).

2. Robot de préparation de commandes mobile selon la revendication 1, **caractérisé en ce que** les positions des points d'articulation fixes (A, D) sur le bras de robot (1) et les longueurs des éléments de liaison (a, b) et de l'élément d'accouplement (c) ainsi que l'orientation de l'outil de réception (6) sur l'élément d'accouplement (c) sont choisies de telle sorte que lors de la rotation des éléments de liaison (a, b) autour des axes d'articulation des points d'articulation fixes (A, D) dans une position neutre, l'outil de réception (6) est orienté horizontalement, tandis qu'aussi bien lors de la rotation des éléments de liaison (a, b) dans une position relevée que lors de la rotation des éléments de liaison (a, b) dans une position abaissée, l'outil de réception (6) est incliné vers le bas en s'éloignant du bras de robot (1) par rapport à l'horizontale.

3. Robot de préparation de commandes mobile selon la revendication 2, **caractérisé en ce que** les points d'articulation fixes (A, D) et les points d'articulation mobiles (B, C) forment les coins d'un quadrilatère (A, B, C, D) défini dans un plan vertical avec un côté long supérieur et un côté long inférieur (D-C, A-B) ainsi qu'un côté haut proche du bras du robot et un côté haut éloigné du bras du robot (A-D, B-C), le côté long supérieur (D-C) étant plus long que le côté long inférieur (A-B) et le point d'articulation fixe supérieur (D) étant décalé par rapport au point d'articulation fixe inférieur (A) en direction du bras du robot (1), de telle sorte que le côté haut proche du bras du robot (A-D) est incliné vers le haut par rapport à la verticale en direction du bras du robot (1), et le côté haut éloigné du bras du robot (B-C) est plus court que le côté haut proche du bras du robot (A-D) et est orienté verticalement en position neutre.

4. Robot de préparation de commandes mobile selon l'une quelconque des revendications 1 à 3, **caractérisé en ce que** l'un des éléments de liaison (a, b) ou l'élément d'accouplement (c) est pourvu d'un dispositif d'entraînement.

5. Robot de préparation de commandes mobile selon l'une quelconque des revendications 1 à 4, **caractérisé en ce qu'**au moins l'un des éléments de liaison (a, b) et/ou l'élément d'accouplement (c) est configuré pour pouvoir être remplacé avec l'outil de réception (6) qui y est disposé.

6. Robot de préparation de commandes mobile selon l'une quelconque des revendications 1 à 4, **caractérisé en ce que** l'axe de levage et d'inclinaison (2) permet, en alternative au mouvement d'inclinaison de l'outil de réception (6), un guidage parallèle de l'outil de réception (6), dans lequel la chaîne à quatre articulations (7) présente une cinématique parallèle, la chaîne à quatre articulations (7) présentant un autre point d'articulation mobile (C') et l'un parmi le point d'articulation mobile (C) et l'autre point d'articulation (C') pouvant respectivement être bloqué.

7. Robot de préparation de commandes mobile selon l'une quelconque des revendications 1 à 6, **caractérisé en ce qu'**au moins l'axe d'articulation de bras (15) voisin de l'axe de levage et d'inclinaison est équipé d'au moins un capteur de rotation et l'axe de levage et d'inclinaison est équipé d'au moins un capteur d'angle d'inclinaison.

8. Robot de préparation de commandes mobile selon l'une quelconque des revendications 1 à 7, **caractérisé en ce que** le bras de robot (1) présente plusieurs éléments de bras (20, 21, 22) qui sont agencés les uns au-dessus des autres.

9. Robot de préparation de commandes mobile selon l'une quelconque des revendications 1 à 7, **caractérisé en ce que** le bras de robot (1) présente plusieurs éléments de bras (20, 21, 22) qui sont agencés à la même hauteur.

10. Robot de préparation de commandes mobile selon l'une quelconque des revendications 1 à 9, **caractérisé en ce que** l'axe de levage et d'inclinaison (2) présente au moins un accumulateur de force, notamment un ressort, appliquant une force de précontrainte pour équilibrer le poids.

11. Robot de préparation de commandes mobile selon l'une quelconque des revendications 1 à 10, **caractérisé en ce que** l'axe de levage et d'inclinaison (2) présente un dispositif d'entraînement en liaison active avec un dispositif de commande, et le dispositif de commande est lui-même en liaison active avec un capteur d'oscillations pour détecter des oscillations verticales et est conçu pour évaluer les données du capteur et pour commander le dispositif d'entraînement de telle sorte que les oscillations sont compensées par des contre-oscillations.
